# EUROPÄISCHE PATENTSCHRIFT

(11) **EP 3 494 622 B1**
(45) Veröffentlichungstag und Bekanntmachung des Hinweises auf die Patenterteilung: **16.12.2020**
(21) Anmeldenummer: 17751302.5
(22) Anmeldetag: 25.07.2017
(51) Int. Cl.: H02H 11/00

(54) **VERPOLSCHUTZSCHALTUNG**
REVERSE POLARITY PROTECTION CIRCUIT
CIRCUIT DE PROTECTION CONTRE DES INVERSIONS DE POLARITÉ

(30) Priorität: 02.08.2016 DE 102016214285
(43) Veröffentlichungstag der Anmeldung: 12.06.2019
(73) Patentinhaber: Continental Automotive GmbH, 30165 Hannover (DE)
(72) Erfinder: CHRIST, Dominic, 63875 Mespelbrunn (DE)
(86) Internationale Anmeldenummer: PCT/EP2017/068770
(87) Internationale Veröffentlichungsnummer: WO 2018/024544

(56) Entgegenhaltungen:
- EP-A1- 1 978 617
- DE-A1-102009 007 818
- DE-A1-102011 057 002

## Beschreibung

Die vorliegende Erfindung betrifft eine einen MOSFET aufweisende Verpolschutzschaltung. Eine solche Schaltung wird beispielsweise zum Schutz von elektrischen Schaltungen in Kraftfahrzeugen gegen falsches Anklemmen der Batteriespannung eingesetzt.

Die DE 198 17 790 A1 zeigt eine Verpolschutzschaltung mit einem MOSFET und einer Sperrschaltung die den MOSFET im Fall einer Verpolung sperrt. Als nachteilig an dieser bekannten Verpolschutzschaltung ist anzusehen, dass der MOSFET eine Ladungspumpe benötigt. Dies führt zu einem andauernd fließenden Ruhestrom, und damit einhergehendem Energieverbrauch. Auch die EP 1 978 617 A1 und die DE 10 2009 007 818 A1 zeigen ähnliche Verpolschutzschaltungen. Alternative Lösungen, die mit reduziertem Ruhestrom auskommen, haben den Nachteil, nicht in allen Situationen einen zuverlässigen Verpolschutz zu gewährleisten.

Aufgabe der Erfindung ist es, eine demgegenüber verbesserte Verpolschutzschaltung vorzuschlagen. Gelöst wird diese Aufgabe durch die im kennzeichnenden Teil der unabhängigen Ansprüche angegebenen Maßnahmen.

Die erfindungsgemäße Verpolschutzschaltung , nach Anspruch 1, weist einen Detektor zum Detektieren einer Spannungsunterschreitung zwischen Source-Anschluss und Drain-Anschluss des MOSFET auf. Eine Spannungsunterschreitung, die mit einer Flanke einhergeht, und beispielsweise bei einer Verpolung auftritt, wird somit schnell und zuverlässig detektiert. Im Fall einer Spannungsunterschreitung sperrt ein Schnellabschalter den MOSFET. Ein Komparator ist vorgesehen, um die an Drain-Anschluss und Source-Anschluss des MOSFET anliegenden Spannungen zu vergleichen. Der Ausgang des Komparators ist mit dem Gate-Anschluss des MOSFET verbunden, um diesen wiederzuzuschalten, wenn keine Verpolung mehr vorliegt. Ein Aufwärtswandler ist zur Spannungsversorgung auch bei Versorgungsspannungsabfall vorgesehen, ein Abwärtswandler zur Spannungsversorgung nachgeschalteter Verbraucher. Liegt keine Verpolung vor, ist der Komparator über einen Schalter ausgeschaltet. Die erfindungsgemäße Lösung hat den Vorteil, dass nur im Fall einer detektierten Spannungsunterschreitung energieverbrauchende Bauteile zugeschaltet werden, um den MOSFET zu sperren und bei Wiederherstellung der korrekten Spannung wieder durchzuschalten. Im Normalbetrieb werden keine andauernd fließenden Ruheströme erzeugt, wie sie im genannten Stand der Technik auftreten. Komparator und Detektor sind bei korrekter Spannung am MOSFET nicht stromdurchflossen. Die auch in diesem Betriebszustand aktiven Auf- und Abwärtswandler stehen zur Versorgung nachgeschalteter Verbraucher, also weiterer Elemente der durch die Verpolschutzschaltung geschützten Schaltung, zur Verfügung. Ihr Betrieb ist daher ohnehin erwünscht, und ruft keinen zusätzlichen Energieverbrauch hervor.

Vorzugsweise ist der MOSFET ein N-Kanal-MOSFET. Dies hat den Vorteil, dass ein N-Kanal-MOSFET gegenüber einem P-Kanal-MOSFET ein schnelleres Wiedereinschalten ermöglicht, und dadurch geringere Verluste an der intrinsischen Diode des MOSFET hervorgerufen werden und ein an der intrinsischen Diode auftretender hohe Spannungsabfall vermieden wird. Dadurch werden Probleme an nachgeschalteten Schaltungsblöcken vermieden.

Erfindungsgemäß ist der Schalter als Ausschaltverzögerer ausgelegt. Die dadurch hervorgerufene Hysterese beim Ausschalten hat den Vorteil, dass der Komparator auch noch für eine gewisse Zeit nach Wiederherstellung der korrekten Polarität zwischen Source- und Drain-Anschluss des MOSFET aktiv ist, und dessen Gate-Anschluss versorgt. Somit wird ein undefinierter Zustand des MOSFET vermieden, wie er bei zu langsamem Erreichen der korrekten Spannung auftreten kann. Dieser Fall zu geringer Spannung kann beispielsweise beim Betätigen der Zündung in einem Kraftfahrzeug vorkommen, beim sogenannten Kaltstartimpuls.

Im einfachsten Fall ist der Schnellabschalter als Widerstand ausgebildet. Dies hat den Vorteil dass der MOSFET in jeder Betriebssituation selbstsperrend ist.

Ein erfindungsgemäßes Gerät weist eine erfindungsgemäße Verpolschutzschaltung auf. Insbesondere bei Kombinationsinstrumenten oder Steuergeräten, welche auch während eines Kaltstartimpulses eines Kraftfahrzeugs im Betrieb sein müssen, hat dies den Vorteil, dass sie auch dann zuverlässig versorgt werden, wenn die Spannung am MOSFET aufgrund des Kaltstartimpulses abfällt, und dass sie dennoch zuverlässig gegen Verpolung geschützt sind.

Weitere Details der Erfindung und ihrer Vorteile können auch der nachfolgenden Beschreibung von Ausführungsbeispielen entnommen werden. Dabei zeigen:
- Fig.1: Verpolschutzschaltung in Blockdarstellung
- Fig.2: Schaltplan einer Verpolschutzschaltung

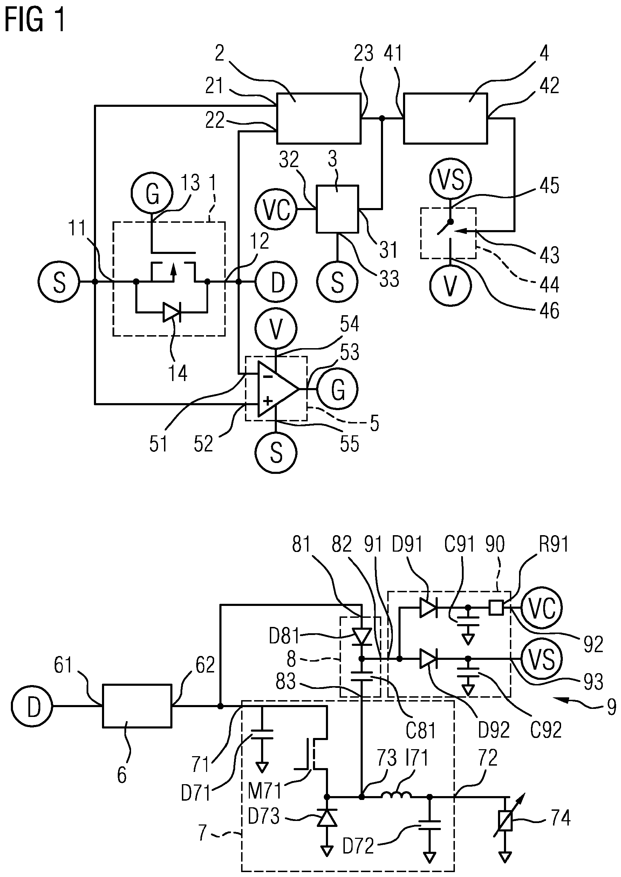

Figur 1 zeigt eine erfindungsgemäße Verpolschutzschaltung in Blockdarstellung. Der MOSFET 1 weist einen Source-Anschluss 11, einen Drain-Anschluss 12 und einen Gate-Anschluss 13 auf. Ebenfalls gezeigt ist die intrinsischen Diode 14 des MOSFET 1. Ein Detektor 2 ist mit seinem ersten Anschluss 21 mit dem Source-Anschluss 11 verbunden. Sein zweiter der Anschluss 22 ist mit dem Drainanschluss 12 verbunden. Der Ausgang 23 des Detektors 2 ist mit dem Schalteingang 31 eines Schnellabschalters 3 verbunden und mit dem Eingang 41 eines Ausschaltverzögerers 4. Der Schnellabschalter 3 ist mit seinem Anschluss 32 über den Knoten VC über einen hier nicht dargestellten Widerstand mit dem Gate-Anschluss 13 verbunden, und mit seinem Anschluss 33 über den Knoten S mit dem Source-Anschluss 11. Der Ausgang 42 des Ausschaltverzögerers 4 ist mit dem Schalteingang 43 eines Schalters 44 verbunden, dessen Eingang 45 über den Knoten VS versorgt wird und im geschalteten Zustand dessen Ausgang 46 und damit den Knoten V versorgt.

Ein Komparator 5 ist mittels seines invertierenden Eingangs 51 mit dem Drain-Anschluss 12 des MOSFET 1 verbunden. Sein nichtinvertierender Eingang 52 ist mit dem Source-Anschluss 11 des MOSFET 1 verbunden. Der Ausgang 53 des Komparators 5 ist über den Knoten G mit dem Gate-Anschluss 13 des MOSFET 1 verbunden. Ein Versorgungsanschluss 54 des Komparators 5 ist mit dem Knoten V verbunden, ein anderer Versorgungsanschluss 55 mit dem Knoten S.

Im unteren Teil der Figur 1 ist im linken Teil der Aufwärtswandler 6 gezeigt, der oft auch als Booster bezeichnet wird. Sein Eingang 61 ist über den Knoten D mit dem Drain-Anschluss 12 des MOSFET 1 verbunden, sein Ausgang 62 mit dem Eingang 71 eines Abwärtswandlers 7 und dem ersten Eingang 81 einer Bootstrap-Schaltung 8. Der zweite Eingang 83 der Bootstrap-Schaltung 8 ist mit einem Schaltknoten 73 des Abwärtswandlers 7 verbunden. Am Ausgang 72 des Abwärtswandlers 7 ist eine Last 74 als Platzhalter für nachgeschaltete Verbraucher beziehungsweise Schaltungsblöcke dargestellt. Am Mittenabgriff 82 der Bootstrap-Schaltung 8 ist eine Ladungspumpenschaltung 90 über ihren Anschluss 91 angeschlossen. Ein Ausgang 92 der Ladungspumpenschaltung 90 versorgt den Knoten VC, ein Ausgang 93 den Knoten VS. Die Ladungspumpenschaltung 90 weist in bekannter Weise Dioden D91, D92, Kondensatoren C91, C92 und Widerstände R91 auf. Die Bootstrap-Schaltung 8 und die Ladungspumpenschaltung 90 bilden zusammen die Ladungspumpe 9. Der Abwärtswandler 7 weist Dioden D71, D72, D73 eine Induktivität I71 und einen Transistor M71 auf.

Die Erfindung beruht mit anderen Worten auf der Idee, eine Diode einer Verpolschutzschaltung durch einen MOSFET 1 zu ersetzen, dessen intrinsische Diode 14 die Diodenfunktion übernimmt, und der bei Spannung in Durchlassrichtung durchschaltet und damit Verluste an der intrinsischen Diode 14 reduziert. Der MOSFET 1 ist als N-Kanal-MOSFET ausgelegt. Dieser N-Kanal-MOSFET ist mit seinem Source-Anschluss 11 an die positive Seite der Spannungsversorgung angebunden und mit seinem Drain-Anschluss 12 an die Last 74. Der MOSFET 1 ist also "High Side" in die Gesamtschaltung eingebunden.

Die Spannungen am Source-Anschluss 11 und am Drain-Anschluss 12 werden einem Komparator 5 zugeführt, der hier als Differenzverstärker ausgelegt ist. Dieser Differenzverstärker ist im normalen Betrieb abgeschaltet. Zusätzlich werden die Spannungen am Drain-Anschluss 12 und am Source-Anschluss 11 von einem Detektor 2 überwacht, welcher eine schnelle Flanke am Source-Anschluss 11 detektiert. Tritt eine Flanke auf, so wird der Gate-Anschluss 13 des N-Kanal-MOSFET entladen und die Versorgungsspannung für den Differenzverstärker wird angeschaltet. Wenn die Spannung am Source-Anschluss 11 wieder größer ist als die Spannung am Drain-Anschluss 12, wird der MOSFET 1 wider durchgeschaltet. Danach wird der Differenzverstärker wieder abgeschaltet.

Der Differenzverstärker, der Komparator 5, und der Detektor 2 benötigen keinen Anschluss an Masse und können daher auch keinen dauerhaften Stromfluss von Versorgung nach Masse verursachen. Der Differenzverstärker wird dazu verwendet, den N-Kanal-MOSFET wieder einzuschalten, sobald die Spannung am Source-Anschluss 11 größer - oder wieder größer - ist, als die Spannung am Drain-Anschluss 12. Dies geschieht durch den Einsatz des Komparators 5 möglichst schnell. Dieses schnelle Wiedereinschalten stellt ein verbessertes Verhalten gegenüber bekannten Lösungen dar. Wird beispielsweise ein P-Kanal-MOSFET verwendet, so dauert das Wiedereinschalten mehrere hundert Mikrosekunden. In dieser Zeit ist nur die intrinsische Diode 14 des MOSFET 1 leitend. Der in diesem Zustand hohe Spannungsabfall stellt häufig ein Problem für die nachgeschalteten Schaltungsblöcke, hier durch die Last 74 repräsentiert, dar. Zusätzlich tritt bei sehr geringen Eingangsspannungen, beispielsweise einem 3,2V Kaltstartpuls, das Problem auf, dass keine ausreichende Gate-Source-Spannung mehr zur Verfügung steht, um den MOSFET 1 komplett durchzuschalten.

Erfindungsgemäß werden die im Kraftfahrzeugsystem bereits vorhandenen Komponenten so mitgenutzt, dass ohne großen zusätzlichen Aufwand eine Verbesserung erzielt wird. Eine Eigenschaft dieser Kraftfahrzeugsysteme ist das Vorhandensein eines sogenannten Preboost, eines Step-Up-Wandlers, des Aufwärtswandlers 6, welcher nur aktiv wird, wenn die Batteriespannung stark abfällt. Dies ist beispielsweise beim Kaltstart der Fall. Dem Aufwärtswandler 6 ist ein Step-Down-Wandler, der Abwärtswandler 6, nachgeschaltet, welcher das Kraftfahrzeugsystem im normalen Betrieb dauerhaft mit Spannung versorgt. Beide Wandler 6, 7, oder Bauteile entsprechender Funktion, sind für den Betrieb der erfindungsgemäßen Verpolschutzschaltung notwendig: Der Aufwärtswandler 6 sorgt dafür, dass stets genügend Eingangsspannung für den nachgeschalteten Abwärtswandler 7 zur Verfügung steht. Diese Versorgungsspannung wird auch für die Erzeugung der Betriebsspannung für die Aktive Diode, den MOSFET 1, verwendet. Auf diese Weise wird sichergestellt, dass auch bei eigentlich zu geringen Eingangsspannungen der MOSFET 1 hinreichend durchgeschaltet wird.

Im Abwärtswandler 7 wird nach dem Bootstrap-Verfahren eine Spannung generiert, welche auf mindestens zwei separate Spannungen aufgeteilt wird. Eine diese Spannungen lädt einen relativ großen Kondensator C92, welcher als Versorgung für den Komparator 5 verwendet wird. Der negative Versorgungsspannungsanschluss 55 des Komparators 5 ist mit dem Source-Potential des N-Kanal MOSFET verbunden. Die zweite Spannung wird über einen Vorwiderstand R11 auf den Gate-Anschluss 13 des N-Kanal-MOSFET geleitet. Auf diese Weise wird im normalen Betrieb der MOSFET 1 permanent durchgeschaltet.

Da der Differenzverstärker, und damit der Komparator 5, im normalen Betrieb abgeschaltet ist und sein Bezugspotential mit dem Source-Anschluss 11 verbunden ist, tritt im normalen Betrieb kein relevanter Ruhestrom auf, insbesondere nicht nach Masse.

Bei bekannten Lösungen kann ein kurzzeitiges unerwünschtes Abschalten des Transistors auftreten. Dies ist zum einen der Fall, wenn ein P-Kanal-MOSFET bei sehr kleinen Eingangsspannungen nicht mehr vollständig durchgeschaltet wird. Zum anderen gibt es Integrierte Schaltkreise, die zwar ebenfalls ohne Verbindung zu Masse und damit ruhestromfrei arbeiten, jedoch darauf angewiesen sind, einen MOSFET kurzzeitig abzuschalten, um ihre Kondensatoren nachzuladen. Beides ist bei der erfindungsgemäßen Lösung nicht der Fall.

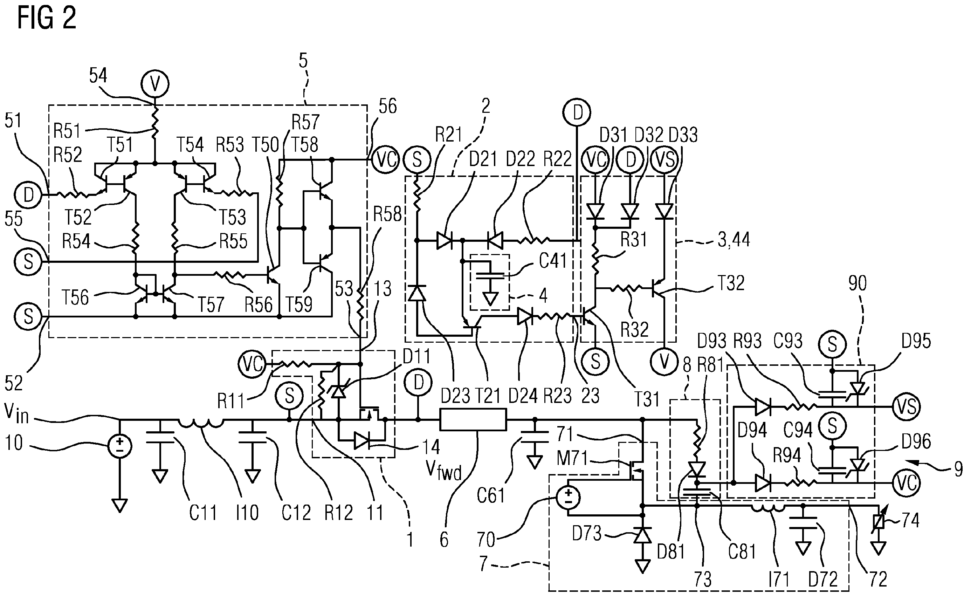

Figur 2 zeigt einen beispielhaften Schaltplan einer erfindungsgemäßen Verpolschutzschaltung. Man erkennt den MOSFET 1, den Detektor 2, den Komparator 5, den Aufwärtswandler 6, den Abwärtswandlers 7 und die Ladungspumpe 9, die aus Bootstrap-Schaltung 8 und Ladungspumpenschaltung 90 besteht. Schnellabschalter 3 und Schalter 44 sind in einem Block dargestellt.

Der Komparator 5 ist als diskret aufgebauter Differenzverstärker mit nachgeschaltetem Impedanzwandler dargestellt. Der Differenzverstärker weist in bekannter Weise Transistoren T51 bis T57 und Widerstände R51 bis R57 auf. Sein invertierender Eingang 51 ist mit dem Knoten D verbunden, sein nichtinvertierender Eingang 52 mit dem Knoten S. Der Versorgungsanschluss 54 ist mit Knoten V verbunden, der Versorgungsanschluss 55 mit Knoten S. Der Impedanzwandler ist in bekannter Weise aus Transistoren T50, T58, T59 und Widerständen R56 bis R58 aufgebaut. Sein Ausgang 53 ist mit dem Gate-Anschluss 13 des MOSFET 1 verbunden, versorgt wird er über den Anschluss 56 vom Knoten VC. Der zwischen Ausgang 53 und Gate-Anschluss 13 befindliche Knoten G ist hier nicht dargestellt. Wenn der Komparator 5 abgeschaltet ist, wird der Gate-Anschluss 13 des MOSFET 1 über einen Widerstand R11 und eine Diode D11 angesteuert. Alternativ kann dies auch über einen Widerstand R12 erfolgen, dann aber mit einem geringen Verluststrom. Weiterhin ist die intrinsische Diode 14 dargestellt.

Der Source-Anschluss 11 des MOSFET 1 ist hier beispielhaft über eine Induktivität I10 und Kondensatoren C11, C12 mit der Spannungsversorgung 10 verbunden.

Der Detektor 2 weist einen Transistor T21, Dioden D21 bis D24 und Widerstände R21 bis R23 auf. Der Ausschaltverzögerer 4 ist hier mittels eines Kondensators C41 dargestellt. Der Kondensator C41 sorgt dafür, dass der Transistor T21 leitend bleibt. Er stellt somit ein zentrales Element dar. Der Schnellabschalter 3 und der Schalter 44 sind in einem gemeinsamen Block dargestellt, sie weisen Transistoren T31, T32, Widerstände R31, R32 und Dioden D31 bis D33 auf.

Der Abwärtswandler 7 ist hier, alternativ zu Figur 1, über einen Kondensator C61 mit dem Ausgang des Aufwärtswandlers 6 verbunden. Der Transistor M71 ist über eine Spannungsversorgung 70 geschaltet, sein Drain-Anschluss ist mit dem Eingang 71 verbunden, sein Source-Anschluss über die Diode D73 mit Masse. Die anderen Bauteile entsprechen den zu Fig.1 dargestellten. Die Bootstrap-Schaltung 8 weist, alternativ zu Figur 1, einen zusätzlichen Widerstand R81 auf, die Diode D81 und der Kondensator C81 sind unverändert. Die Ladungspumpe 9 weist Dioden D93 bis D95, Wiederständen R93, R94 und Kondensatoren C93, C94 auf.

Die Arbeitsweise der erfindungsgemäßen Verpolschutzschaltung mit ruhestromfreier aktive Diode, dem MOSFET 1, ist wie folgt: Vor dem ersten Anschalten sind die Kondensatoren C41 und C94 entladen. Daher ist auch die Gate-Source-Strecke des MOSFET 1 entladen. Liegt beim Anschließen der Versorgungsspannung Vᵢₙ der Pluspol der angeschlossenen Spannung am Source-Anschluss 11 des MOSFET 1 an, so wird die intrinsische Diode 14 des MOSFET 1 leitend. Die Spannung am Drain-Anschluss 12 des MOSFET 1 steigt daher auf Vᵢₙ-V_{fwd} . Mit V_{fwd} wird im folgenden die Flussspannung der intrinsischen Diode 14 bezeichnet. Das Gesamtsystem besteht aus der erfindungsgemäßen Verpolschutzschaltung, einem Aufwärtswandler 6, welcher bei einem ausreichend großen Absinken der Spannung am Drain-Anschluss 12 in Betrieb geht, um dem nachfolgenden Abwärtswandler 7 mit einer ausreichenden Eingangsspannung zu versorgen. Der im Gesamtsystem ohnehin vorhandene Abwärtswandler 7 beginnt zu arbeiten. Dabei wechselt die Spannung an der Katode der Diode D73 zwischen (Vᵢₙ-V_{fwd}) und etwa -0,7V. Liegen an dem Schaltknoten 73 die -0,7V an, so lädt sich der Kondensator C81 auf etwa die Spannung Vᵢₙ-V_{fwd} auf. Steigt die Spannung an der Katode der Diode D73 wieder auf Vᵢₙ-V_{fwd}, so steigt die Spannung an der Anode der Diode D94 auf etwa das Doppelte von Vᵢₙ-V_{fwd}. Über den Widerstand R94 wird der Kondensator C94 aufgeladen. Da der negative Anschluss des Kondensators C94 sich auf den Knoten S bezieht, beträgt die resultierende Spannung am Knoten VC über diesen Kondensator C94 im statischen Zustand etwa Vᵢₙ. Über den Widerstand R11 wird die Gate-Source-Strecke des MOSFET 1 auf Vᵢₙ aufgeladen. Infolgedessen wird der MOSFET 1 durchgeschaltet, wodurch der Spannungsabfall über dem MOSFET 1 auf Null oder nahezu Null zurückgeht. Der Kondensator C41 wird nach dem Ausschalten bis auf eine Diodenspannung auf die Eingangsspannung Vᵢₙ aufgeladen. Dadurch besitzt die Basis-Emitter-Spannung des Transistor T21 ungefähr den Wert +0,7V. Infolgedessen bleibt der PNP-Transistor T21 gesperrt. Da daher kein Strom in die Basis des NPN-Transistors T31 fließt, bleibt auch dieser gesperrt. Dies führt dazu, dass die Basis-Emitter-Strecke des PNP-Transistor T32 den Spannungswert 0V aufweist, weshalb auch der Transistor T32 sperrt. Dies führt dazu, dass der Differenzverstärker des Komparators 5 nicht mit Strom versorgt wird. Da daher auch die Basis des NPN-Transistors T50 nicht mit Strom versorgt wird, bleibt der PNP-Transistor T59 gesperrt. Da sämtliche Transistoren mit Ausnahme des MOSFET 1 gesperrt sind, benötigt die Schaltung im Normalbetrieb mit Ausnahme des Gate-Source-Leckstroms des MOSFET 1, welcher üblicherweise kleiner als 100nA ist, keinen Ruhestrom. Solange der Aufwärtswandler 6 in der Lage ist, eine ausreichend hohe Eingangsspannung für den Abwärtswandler 7 bereitzustellen, ist auch eine ausreichende Spannungsversorgung der Ladungspumpe 9 gewährleistet. Auf diese Weise ist die vorgestellte Schaltung in der Lage, eine ausreichend hohe Gate-Source-Spannung für den MOSFET 1 bereitzustellen, um diesen sicher durchschalten zu können.

Sinkt die Spannung am Knoten S schneller als die RC-Zeitkonstante der Kapazitäten am Knoten D und der dort angeschlossenen Last, so wird der Transistor T21 im Bereich der Spannungsversorgung des Differenzverstärkers und des Impedanzwandlers leitend, sobald die Spannung am Knoten S mindestens 0,6V kleiner ist als die Spannung am Knoten D. Infolgedessen wird der Transistor T31 leitend, welcher wiederum den Transistor T32 durchschaltet. Auf diese Weise wird der Komparator 5 mit Strom versorgt. Der Komparator 5 vergleicht die Spannung an Source-Anschluss 11 und Drain-Anschluss 12 miteinander. Solange die Spannung am Drain-Anschluss 12 größer ist als die Spannung am Source-Anschluss 11, gibt der Komparator 5 eine positive Spannung auf den Basisvorwiderstand R56 des Transistors T50, welcher infolgedessen zu leiten beginnt. Der nachgeschaltete Impedanzwandler, der die Transistoren T58, T59 aufweist, sorgt dafür, dass die Gate-Source-Strecke des MOSFET 1 entladen wird. Auf diese Weise wird der MOSFET 1 gesperrt. Gleichzeitig wird auch der Kondensator C94 entladen. Für den Fall, dass das Absinken von Vᵢₙ durch beispielsweise das Abschalten des Gesamtsystems durch einen übergeordneten Schalter entsteht, wird die Verpolschutzschaltung in einen inhärent sicheren Zustand gebracht. Solange keine Spannung über den Kondensator C94 präsent ist, kann der MOSFET 1 nicht durchgeschaltet werden. Im Falle einer nun erfolgenden Verpolung ist der MOSFET 1 direkt gesperrt und das Gesamtsystem ist vor Verpolung geschützt. Bedingung für dieses Verhalten ist, dass die Eingangsspannung schnell gegenüber der Zeitkonstante, definiert durch die Last und der im Gesamtsystem vorhandenen Kapazitäten, absinkt. Soll auch ein langsames Absinken mit anschließender Verpolung abgedeckt werden, so wird ein zusätzlicher Pull-Down-Widerstand R12 in die Gate-Source-Strecke eingefügt. Dann tritt jedoch ein geringer Ruhestrom auf. Alternativ sind schaltungstechnische Maßnahmen möglich, beispielsweise einen schaltbaren Widerstand aus zusätzlichen MOSFETs zu bauen, welche erst bei einem Absinken der Versorgungsspannung aktiviert wird. Solange die am Source-Anschluss 11 anliegende Versorgungsspannung noch positiv ist, gilt folgendes: Steigt die Spannung am Source-Anschluss 11 gerade wieder über die Spannung, welche am Drain-Anschluss 12 anliegt, so sorgt der Komparator 5 dafür, dass der Transistor T50 wieder gesperrt wird. Daraufhin sperrt der Transistor T59 wieder und der Transistor T58 wird wieder leitend. Die Gate-Source-Strecke des MOSFET 1 wird über den Widerstand R11 und den Transistor T58 wieder geladen. Auf diese Weise wird der MOSFET 1 hinreichend schnell wieder durchgeschaltet, sobald dies angezeigt ist.

Mit anderen Worten weist die erfindungsgemäße Verpolschutzschaltung eine aktive Diode auf, die als Ersatz für Si- und Schottky-Dioden eingesetzt wird, um die Flussspannung zu verringern. Die aktive Diode ist dabei als N-Kanal-MOSFET und nicht als P-Kanal-MOSFET ausgeführt. N-Kanal-MOSFET benötigen eine erhöhte Gate-Source-Spannung, um durchgeschaltet zu werden. Diese Spannung kann mittels einer Ladungspumpe erzeugt werden. Dies führt entweder zu einem andauernd benötigten Ruhestrom, oder dazu, dass der MOSFET kurzzeitig abgeschaltet werden muss, obwohl er zu diesem Zeitpunkt eingeschaltet sein sollte, um die benötigte Spannung zwischen Gate-Anschluss und Source-Anschluss wieder aufzubauen. Folgende Probleme können dabei einzeln oder in Kombination auftreten: ein andauernd fließenden Ruhestrom, ein kurzzeitiges unerwünschtes Abschalten des MOSFET, ein nicht hinreichend kontrollierbares Wiedereinschalten des MOSFET nach Verpolung aus zeitlicher Sicht, oder, bei zu geringen Eingangsspannungen, ein nicht hinreichendes Durchschalten des MOSFET. Mit der vorliegenden Verpolschutzschaltung wird ein andauernder Ruhestrom vermieden, ein sicheres Durchschalten des MOSFET bei niedrigen Eingangsspannungen sichergestellt sowie ein hinreichend schnelles Wiedereinschalten des MOSFET nach Ende der Verpolung.

Die benötigte Gate-Source-Spannung wird durch die Verwendung einer Bootstrap-Schaltung aus dem ohnehin im System enthaltenen DC-DC-Wandler, der Kombination aus Aufwärtswandler 6 und Abwärtswandler 7, entnommen. Soll der MOSFET 1 dauerhaft eingeschaltet werden, so wird der Komparator 5 von der Stromversorgung getrennt. Ein Ruhestrom tritt somit nicht auf. Die Ansteuerschaltung ist so ausgelegt, dass die Gate-Source-Strecke des MOSFET 1 automatisch geladen wird.

Die zum Betrieb der Verpolschutzschaltung notwendige Spannung wird hinter dem im System ohnehin vorhandenen Aufwärtswandler 6 abgegriffen. So wird sichergestellt, dass stets eine genügend hohe Spannung zum Durchschalten des MOSFET 1 zur Verfügung steht. Ein sicheres Durchschalten des MOSFET 1, auch bei geringer Eingangsspannung, ist somit sichergestellt.

Der in der Verpolschutzschaltung vorhandene Komparator 5 wird bei Verpolung und schnellem Abfallen der Eingangsspannung aktiviert. Der Komparator 5 vergleicht Eingangsspannung und Ausgangsspannung der aktiven Diode, des MOSFET 1, und veranlasst das Wiedereinschalten wenn die Eingangsspannung größer wird als die Ausgangsspannung. Eine zusätzliche Schalthysterese ist vorteilhafterweise vorgesehen. Der Komparator 5 bleibt so lange eingeschaltet, wie die vom Kondensator C41 bereitgestellte Spannung um mindestens 0,7V größer ist als die Spannung am Source-Anschluss des MOSFET M1. Der Bootstrap-Kondensator C81 wird nicht entladen, da er permanent von dem Abwärtswandler 7 nachgeladen wird. Der Bootstrap-Kondensator C81 wird zum Laden der Gate-Source-Strecke des MOSFET M1 und zum Erzeugen der Betriebsspannung des Komparators 5 verwendet. Dies ermöglicht einen inhärent sicheren Zustand, in dem der MOSFET 1 gesperrt ist, wenn die Versorgung des Gesamtsystems abgeschaltet wird. Die Verpolschutzschaltung kann alternativ auch so modifiziert werden, dass die Gate-Source-Strecke durch einen Widerstand R12 entladen wird. Durch eine geeignete Auslegung des Widerstands R94 und des Kondensators C94 der Ladungspumpe 9 wird sichergestellt, dass der MOSFET 1 stets gesperrt wird, kurz nachdem der ohnehin im System vorhandene Abwärtswandler 7 abgeschaltet wird. Wird diese Maßnahme implementiert, so wird der MOSFET 1 auch bei einem sehr langsamen Absinken der Versorgungsspannung in Verbindung mit einer anschließenden Verpolung stets sicher gesperrt. Die erfindungsgemäße Verpolschutzschaltung benötigt im leitenden Zustand des MOSFET 1 keinen zusätzlichen Ruhestrom. Auch bei geringen Eingangsspannungen wird der MOSFET 1 vollständig durchgeschaltet.

Geringfügige Abwandlungen oder alternative Ausführungen der oben beschriebenen Schaltung liegen im Können des Fachmanns.

## Patentansprüche

1. Verpolschutzschaltung aufweisend einen MOSFET (1) und eine Sperrschaltung, **dadurch gekennzeichnet, dass** die Sperrschaltung aufweist
- einen Detektor (2) dessen erster Eingang (21) mit dem Source-Anschluss (11) und dessen zweiter Eingang (22) mit dem Drain-Anschluss (12) des MOSFET (1) verbunden ist, und dessen Ausgang (23) mit dem Schalteingang (31) eines Schnellabschalters (3) verbunden ist, der zwischen Source-Anschluss (11) und Gate-Anschluss (13) des MOSFET (1) angeordnet ist,
- einen Komparator (5) dessen erster Eingang (52) mit dem Source-Anschluss (11) und dessen zweiter Eingang (51) mit dem Drain-Anschluss (12) des MOSFET (1) verbunden sind, und dessen Ausgang (53) mit dem Gate-Anschluss (13) des MOSFET (1) verbunden ist,
- einen Aufwärtswandler (6) dessen Eingang (61) mit dem Drain-Anschluss (12) des MOSFET (1) verbunden ist,
- einen Abwärtswandler (7) dessen Eingang (71) mit dem Ausgang (62) des Aufwärtswandlers (6) verbunden ist, und dessen Ausgang (72) zur Versorgung einer Last (74) zur Verfügung steht, und der einen Schaltknoten (73) aufweist,
- eine Ladungspumpe (9) deren erster Eingang (81) mit dem Ausgang des Aufwärtswandlers (6) verbunden ist und deren zweiter Eingang (83) mit dem Schaltknoten (73), und die einen ersten Ausgang (92) aufweist, der mit dem Gate-Anschluss (13) des MOSFET (1) verbunden ist, und
- einen Schalter (44), der zwischen einem Versorgungsanschluss (54) des Komparators (5) und einem zweiten Ausgang (92) der Ladungspumpe (9) angeordnet ist, und mit dem Ausgang (23) des Detektors (2) verbunden ist.

2. Verpolschutzschaltung nach Anspruch 1, **dadurch gekennzeichnet, dass** der MOSFET (1) ein N-Kanal-MOSFET ist.

3. Verpolschutzschaltung nach einem der vorhergehenden Ansprüche, **dadurch gekennzeichnet, dass** der Schalter (44) mit einem Ausschaltverzögerer (4) verbunden ist.

4. Verpolschutzschaltung nach einem der vorhergehenden Ansprüche, **dadurch gekennzeichnet, dass** der Schnellabschalter (3) als Widerstand (R12) ausgebildet ist.

5. Gerät mit einer Verpolschutzschaltung gemäß einem der Ansprüche 1-4.

## Claims

1. Polarity reversal protection circuit comprising a MOSFET (1) and a turn-off circuit, **characterized in that** the turn-off circuit comprises
- a detector (2), the first input (21) of which is connected to the source terminal (11) and the second input (22) of which is connected to the drain terminal (12) of the MOSFET (1), and the output (23) of which is connected to the switching input (31) of a quick-break switch (3) arranged between source terminal (11) and gate terminal (13) of the MOSFET (1),
- a comparator (5), the first input (52) of which is connected to the source terminal (11) and the second input (51) of which is connected to the drain terminal (12) of the MOSFET (1), and the output (53) of which is connected to the gate terminal (13) of the MOSFET (1),
- a boost converter (6), the input (61) of which is connected to the drain terminal (12) of the MOSFET (1),
- a buck converter (7), the input (71) of which is connected to the output (62) of the boost converter (6), and the output (72) of which is available for supplying a load (74), and which has a switching node (73),
- a charge pump (9), the first input (81) of which is connected to the output of the boost converter (6) and the second input (83) of which is connected to the switching node (73), and which has a first output (92) connected to the gate terminal (13) of the MOSFET (1), and
- a switch (44) arranged between a supply terminal (54) of the comparator (5) and a second output (92) of the charge pump (9) and connected to the output (23) of the detector (2).

2. Polarity reversal protection circuit according to Claim 1, **characterized in that** the MOSFET (1) is an N-channel MOSFET.

3. Polarity reversal protection circuit according to either of the preceding claims, **characterized in that** the switch (44) is connected to a switch-off delay unit (4).

4. Polarity reversal protection circuit according to any of the preceding claims, **characterized in that** the quick-break switch (3) is configured as a resistor (R12).

5. Device comprising a polarity reversal protection circuit according to any of Claims 1-4.

## Revendications

1. Circuit de protection contre des inversions de polarité, présentant un MOSFET (1) et un circuit de blocage, **caractérisé en ce que** le circuit de blocage présente
- un détecteur (2) dont la première entrée (21) est reliée à la borne de source (11) et dont la deuxième entrée (22) est reliée à la borne de drain (12) du MOSFET (1), et dont la sortie (23) est reliée à l'entrée de commutation (31) d'un dispositif d'arrêt d'urgence (3) qui est disposé entre la borne de source (11) et la borne de grille (13) du MOSFET (1),
- un comparateur (5) dont la première entrée (52) est reliée à la borne de source (11) et dont la deuxième entrée (51) est reliée à la borne de drain (12) du MOSFET (1), et dont la sortie (53) est reliée à la borne de grille (13) du MOSFET (1),
- un convertisseur élévateur (6) dont l'entrée (61) est reliée à la borne de drain (12) du MOSFET (1),
- un convertisseur abaisseur (7) dont l'entrée (71) est reliée à la sortie (62) du convertisseur élévateur (6), et dont la sortie (72) est disponible pour alimenter une charge (74), et qui présente un nœud de commutation (73),
- une pompe de charge (9) dont la première entrée (81) est reliée à la sortie du convertisseur élévateur (6) et dont la deuxième entrée (83) est reliée au nœud de commutation (73), et qui présente une première sortie (92) qui est reliée à la borne de grille (13) du MOSFET (1), et
- un commutateur (44) qui est disposé entre une borne d'alimentation (54) du comparateur (5) et une deuxième sortie (92) de la pompe de charge (9), et qui est relié à la sortie (23) du détecteur (2).

2. Circuit de protection contre des inversions de polarité selon la revendication 1, **caractérisé en ce que** le MOSFET (1) est un MOSFET de canal N.

3. Circuit de protection contre des inversions de polarité selon l'une quelconque des revendications précédentes, **caractérisé en ce que** le commutateur (44) est relié à un temporisateur de déclenchement (4).

4. Circuit de protection contre des inversions de polarité selon l'une quelconque des revendications précédentes, **caractérisé en ce que** le dispositif d'arrêt d'urgence (3) est réalisé sous forme de résistance (R12).

5. Appareil comprenant un circuit de protection contre des inversions de polarité selon l'une quelconque des revendications 1 à 4.
